# EUROPÄISCHE PATENTANMELDUNG

(11) **EP 4 852 250 A1**
(43) Veröffentlichungstag der Anmeldung: **09.12.2026**
(21) Anmeldenummer: 26178881.4
(22) Anmeldetag: 15.05.2026
(51) Int. Cl.: H02G 3/32, H02G 3/34

(54) **BEFESTIGUNGSELEMENT ZUR BEFESTIGUNG EINES LANGGUTES SOWIE ANORDNUNG EINES BEFESTIGUNGSELEMENTES SOWIE EINES SETZWERKZEUGES**

(30) Priorität: 03.06.2025 DE 202025103089 U
(71) Anmelder: OBO Bettermann Produktion Deutschland GmbH & Co.KG, 58710 Menden (DE)
(72) Erfinder: Butzek, Julius, 58710 Menden (DE); Ludwig, Henrik, 58706 Menden (DE); Metken, Jannis, 59425 Unna (DE)
(74) Vertreter: Haverkamp Patentanwälte PartG mbB

(57) **Zusammenfassung**

Die Erfindung betrifft ein Befestigungselement 1, 26, 37 zur Befestigung eines Langgutes, etwa eines Rohres zum Führen von elektrischen Leitungen auf einem Untergrund, das Befestigungselement 1, 26, 37 aufweisend einen Montagesockel 2 und zwei einen Aufnahmeraum 5 einfassende Haltearme 3, 4, 33, 34, 43, 44 zum Halten eines Langgutes, die zur Einfassung des Aufnahmeraumes 5 an den Montagesockel 2 einander gegenüberliegend angeschlossen sind, wobei an dem montagesockelseitigen Grund des Aufnahmeraums 5 eine Befestigerdurchbrechung 8 in dem Montagesockel 2 angeordnet ist, die dazu ausgelegt ist, das Befestigungselement 1, 26, 37 mit einem die Befestigerdurchbrechung 8 durchgreifenden Befestiger an einem tragenden Untergrund zu befestigen, und wobei die Befestigerdurchbrechung 8 mit einem Setzwerkzeug durch den Aufnahmeraum 5 hindurch erreichbar ist, wobei hierfür die Haltearme 3, 4, 33, 34 einen ausreichenden Abstand aufweisen.

Besonderes Kennzeichen ist, dass das Befestigungselement 1, 26, 37 ferner eine Klemmzunge 14, 27, 38 und ein Widerlager 15, 28, 48 aufweist, wobei die Klemmzunge 14, 27, 38 und das Widerlager 15, 28, 48 gemeinsam eine zum Halten einer Gerätenase 23 eines Setzwerkzeuges ausgebildete Gerätenasenaufnahme 13 bilden, wobei die Gerätenasenaufnahme 13 innerhalb des Aufnahmeraums 5 angeordnet ist, wobei die Klemmzunge 14, 27, 38 in Bezug auf das Widerlager 15, 28, 48 elastisch verstellbar ist, sodass die Gerätenasenaufnahme 13 zum Einsetzen einer Gerätenase 23 in ihrer Weite veränderlich ist.

## Beschreibung

Die Erfindung betrifft ein Befestigungselement zur Befestigung eines Langgutes, etwa eines Rohres, zum Führen von elektrischen Leitungen auf einem tragenden Untergrund mit den Merkmalen des Oberbegriffs des Anspruchs 1. Ferner betrifft die Erfindung eine Anordnung eines Befestigungselementes und eines Setzgerätes.

Beim professionellen Verlegen von elektrischen Leitungen werden zur Führung sowie zum Schutz Leerrohre eingesetzt, durch die ein oder mehrere elektrische Leitungen geführt werden. Ein solches Leerrohr ist ein Beispiel für ein Langgut. Andere Langgüter sind etwa elektrische Leitungen an und für sich oder Rohre, die der Führung von flüssigen oder gasförmigen Betriebsstoffen dienen.

Zum Halten solcher Langgüter im Raum sind Befestigungselemente bekannt: Diese fassen einerseits das Langgut zumindest abschnittsweise mit zwei Haltearmen ein und sind andererseits über einen Montagesockel an einem tragenden Untergrund, etwa einer Wand oder einer Decke, befestigt. Die Haltearme sind voneinander beabstandet an dem Montagesockel einander gegenüberliegen angeschlossen und fassen einen Aufnahmeraum, in dem das Langgut gehalten ist, ein. Das Befestigungselement kann insgesamt als U-förmig angesprochen werden, wobei die Schenkel die Haltearme und der die Schenkel verbindende Steg der Montagesockel darstellen. Üblicherweise ist das Befestigungselement, respektive die Haltearme dazu ausgelegt, genau eine bestimmte Art eines Langgutes zu halten, etwa ein Leerrohr mit einem bestimmten Durchmesser.

Am Grund des durch die Haltearme eingefassten Aufnahmeraums weist das Befestigungselement, respektive der Montagesockel eine Befestigerdurchbrechung auf. Diese ist dazu ausgelegt, dass ein Befestiger, etwa ein Nagel, ein Setznagel oder eine Schraube, durch diese hindurchgreift und das Befestigungselement mit dem tragenden Untergrund verbindet. Solche Befestiger können separat unmittelbar vor der Montage des Befestigungselementes in die Befestigerdurchbrechung eingesetzt werden; denkbar ist auch eine werkseitige Vormontage des Befestigers in der Befestigerdurchbrechung.

Ein solches Befestigungselement ist etwa aus DE 19754062 B4 - hier als Rohrclip - und aus DE 1927259 U - hier als Rohrschelle -vorbekannt.

Zur Montage des Befestigungselementes an dem tragenden Untergrund bedient man sich häufig sogenannter Setzgeräte. Setzgeräte weisen eine Gerätenase auf, an die ein Befestigungselement lösbar gekoppelt wird, sodass das Befestigungselement zusammen mit dem Setzgerät gehandhabt werden kann. Zur Montage wird in einem ersten Schritt das Befestigungselement an der vorgesehenen Montageposition durch das Setzgerät gehalten. In einem zweiten Schritt wird nach Auslösung des Setzgerätes ein Befestiger, üblicherweise einen Setznagel, durch das Befestigungselement, respektive die Befestigerdurchbrechung, in den tragenden Untergrund eingetrieben, sodass das Befestigungselement an dem tragenden Untergrund befestigt ist. Da während der Montage Setzgerät und Befestigungselement eine gekoppelte Einheit bilden, wird die Handhabung während der Montage vereinfacht, da einhändig möglich.

Zur Kopplung des Befestigungselementes an dem Setzgerät sind unterschiedliche Konzepte vorbekannt, die jeweils auf eine spezielle Geometrie einer bestimmten Gerätenase abgestimmt sind. So sind etwa von Hilti die "X-EKS MX Rohrschelle" und von Bosch der "Pro EPC-Rohrclip" bekannt. Beiden ist gemein, dass der Montagesockel in zwei Ebenen geteilt ist: In einer unteren Ebene ist die Befestigungsdurchbrechung angeordnet, während an einer oberen, von der unteren Ebene als separates Teil anzusehenden Ebene die Haltearme angeformt sind. Werkseitig sind die beiden Ebenen durch Filmscharniere miteinander verbunden. Zur Befestigung an einem tragenden Untergrund ist die obere Ebene mit den Haltearmen üblicherweise im 90°-Winkel gegenüber der unteren Ebene abgeklappt, sodass die untere Ebene an dem tragenden Untergrund befestigt und anschließend die obere Ebene auf die untere Ebene aufgeschwenkt oder aufgeclipst wird.

Eine solche Ausgestaltung ist aus Montagesicht jedoch aufwändig: Nicht nur ist während der Montage ein relativ großer Freiraum zur Platzierung des Befestigungselementes in seinem aufgeklappten Zustand notwendig, auch das nachträgliche Aufsetzen der oberen auf die untere Ebene kann fehlerbehaftet, etwa nicht vollständig ausgeführt, sein und benötigt zumindest einen weiteren Montageschritt.

Von Spit ist der sogenannte "E-Clip" bekannt; ähnlich aufgebaut ist von Celo der "Rohr Clip Schelle UT". Bei diesen beiden Ausgestaltungen ist in den Montagesockel eine massive Gerätenasenaufnahme eingearbeitet, die eine Gerätenase von drei Seiten oder vollumfänglich fest einfasst. Zur Kopplung der Gerätenase mit der Gerätenasenaufnahme wird diese in die Gerätenasenaufnahme eingepresst und dadurch eingeklemmt; es stellt sich eine Presspassung ein.

Auch wenn bei diesen Ausgestaltungen die Handhabung bereits vereinfacht ist und zwar dadurch, dass die Befestigungsdurchbrechung direkt durch den durch die Haltearme eingefassten Aufnahmeraum erreichbar ist und die Haltearme, insbesondere ihre freien Enden einen entsprechenden Abstand zueinander aufweisen, damit der Montagesockel nicht zweischichtig ausgebildet sein muss, so sind auch diese Ausgestaltungen nicht optimal: Bei der Herstellung sowohl der Gerätenasen als auch der Befestigungselemente ist eine hohe Maßhaltigkeit bezüglich der Kontur erforderlich, damit die notwendige Presspassung zwischen Gerätenase und Gerätenasenaufnahme hergestellt werden kann. Zudem: Setzgeräte verfügen über kraftgesteuerte Auslöser, die bezüglich der auf die Gerätenase einwirkenden Kraft in längsaxialer Richtung sensitiv ausgelegt sind. Folglich darf die notwendige Kraft in längsaxialer Richtung auf die Gerätenase zur Kopplung des Befestigungselementes an dem Setzgerät nicht zu groß sein, um ein unbeabsichtigtes Auslösen zu verhindern. Da eine Presspassung erzielt werden muss, muss darüber hinaus die Gerätenasenaufnahme an die Geometrie bzw. Kontur der genutzten Gerätenase angepasst sein. Dies bedingt, dass ein Befestigungselement üblicherweise nur mit einem bestimmten Setzgerät nutzbar ist, sodass ein Monteur an eine bestimmte Paarung Befestigungselement-Setzgerät gebunden ist.

Aufgabe der Erfindung ist es vor diesem aufgezeigten Hintergrund ein Befestigungselement vorzuschlagen, mit welchem die vorstehend genannten Nachteile überwunden werden. Außerdem ist es Aufgabe, eine Anordnung eines Befestigungselementes und eines Setzgerätes anzugeben.

Gelöst wird der erste Teil der Aufgabe durch ein eingangs beschriebenes, gattungsgemäßes Befestigungselement mit den Merkmalen des Anspruchs 1. Der anordnungsbezogene Teil der Aufgabe wird gelöst durch eine Anordnung mit den Merkmalen des Anspruchs 16.

Vorteilhafte Ausgestaltungen ergeben sich aus den abhängigen Ansprüchen und der Beschreibung.

Kern der Erfindung ist, dass die befestigungselementseitige Gerätenasenaufnahme sowohl innerhalb des Aufnahmeraums angeordnet ist, als auch, dass sie durch eine elastisch verstellbare Klemmzunge mit einem Widerlager gebildet ist. Durch die von dem übrigen Befestigungselement losgelöste, elastische Verstellbarkeit der Klemmzunge ist die Gerätenasenaufnahme zum Einsetzen einer Gerätenase in ihrer Weite veränderlich; gleichzeitig ist durch die Anordnung im Aufnahmeraum für die Verstellbarkeit der Klemmzunge ausreichend Raum gegeben, sodass auch größere Gerätenasen von außen eingefasst werden können. So kann der Montagesockel, insbesondere der Bereich um die Befestigerdurchbrechung, massiv ausgestaltet werden, um eine Beschädigung desselben während der Montage zu vermeiden, etwa eine ungewollte Verformung durch eine zu große Befestigerkraft.

Durch die elastische Verstellbarkeit der Klemmzunge wird im Gegensatz zu einer massiven Gerätenasenaufnahme eine sich an die einzusetzende Gerätenase anpassende Gerätenasenaufnahme bereitgestellt. Der Abstand zwischen dem Teil der Klemmzunge, der Teil der Gerätenasenaufnahme ist, und dem entsprechenden Widerlager kann somit nennenswert unterschiedlich weit sein. So kann vorgesehen sein, dass die Klemmzunge gegenüber dem Widerlager derart weit elastisch verstellbar ist, dass in die Gerätenasenaufnahme zwei sich bezüglich ihres Durchmessers unterscheidende Gerätenasen einsetzbar sind, etwa Gerätenasen zweier verschiedener Hersteller. Der Durchmesser der beiden Gerätenasen kann auch durch eine andere Außenkontur unterschiedlich sein. Dem Fachmann ist bewusst, dass der hier angesprochene "Durchmesser" der Gerätenase sich auf den für die Gerätenasenaufnahme relevante Durchmesser der Gerätenase bezieht.

Zum Ausbilden der Gerätenasenaufnahme ragt die Klemmzunge in den Aufnahmebereich hinein, sodass auch bei einer Verstellung derselben der die Gerätenasenaufnahme bildende Teil der Klemmzunge auf eine eingesetzte Gerätenase wirkt. Die Klemmzunge ragt zumindest um den gewünschten Verstellweg in den Aufnahmebereich hinein. Die Gerätenasenaufnahme ist damit Teil des Aufnahmebereichs.

Die Gerätenasenaufnahme ist üblicherweise gegenüber dem oberen, zu den freien Enden der Haltearme weisenden Abschluss der Befestigerdurchbrechung in Achsrichtung der Befestigerdurchbrechung leicht versetzt angeordnet, um eine genaue Ausrichtung der Gerätenase gegenüber der Befestigerdurchbrechung sicherzustellen; üblicherweise ist die Gerätenasenaufnahme achsfluchtend mit der Befestigerdurchbrechung ausgerichtet.

Zum Halten der Gerätenase in der Gerätenasenaufnahme kann insbesondere ein Reibschluss vorgesehen sein. Zur Ausbildung eines Reibschlusses macht man sich die Rückstellkraft der Klemmzunge zu Nutze, mit der die Gerätenase zwischen Klemmzunge und Widerlager eingespannt wird.

Um einen ausreichenden Verstellweg der Klemmzunge bereitzustellen, ist bevorzugt vorgesehen, dass der Wurzelbereich, an dem die Klemmzunge an das Befestigungselement angeschlossen ist, radial außerhalb der Gerätenasenaufnahme angeordnet ist. So wird bei einer Verstellung der Klemmzunge das Einsetzen der Gerätenase in die Gerätenasenaufnahme nicht blockiert.

Ferner kann vorgesehen sein, dass der Wurzelbereich, an dem die Klemmzunge an das Befestigungselement angeschlossen ist, gegenüber der Ebene, in der die Gerätenasenaufnahme vorgesehen ist, in Richtung der Achse der Befestigerdurchbrechung versetzt angeordnet ist. Das bedeutet, dass sie oberhalb bzw. unterhalb der Gerätenasenaufnahme angeordnet ist. Die Herstellung insbesondere als (Spritz)gussteil wird auf diese Weise mit Blick auf die Entformung vereinfacht.

Bevorzugt ist vorgesehen, dass zum Halten der Gerätenase ein Klemmschluss vorliegt, um ein Abstreifen des Befestigungselements von der Gerätenase in deren Längserstreckungsrichtung zu verhindern. Hierfür ist vorgesehen, dass die Klemmzunge widerhakenförmig in Richtung der freien Enden der Haltearme ausgerichtet ist. Wird die Gerätenase in Richtung der freien Enden der Haltearme herausgezogen, wird die von der Klemmzunge auf die Gerätenasenaufnahme wirkende Kraft durch die Anstellung der Klemmzunge gegenüber der Gerätenasenaufnahme vergrößert, sodass sich ein selbstsichernder Klemmschluss ergibt.

Bevorzugt ist dabei vorgesehen, dass die Klemmzunge befestigungselementseitig an einem Haltearm angeschlossen ist. Ihr Wurzelbereich ist dann oberhalb des oberen Abschlusses der Befestigungsdurchbrechung, wobei "oberhalb" bezogen auf den Montagesockel auf Seiten der gegenüberliegend angeordneten Haltearme und damit gegenüberliegend zu der Seite des Montagesockels, die den tragenden Untergrund kontaktiert. Durch den Anschluss der Klemmzunge an einem Haltearm kann die durch den Haltearm ohnehin bereitgestellte Elastizität in Verstellrichtung der Gerätenasenaufnahme mitgenutzt und hierdurch der Wurzelbereich der Klemmzunge entlastet werden - etwa im Gegensatz zu einem Anschluss an den Montagesockel. Zudem wird die Herstellbarkeit des Befestigungselementes erleichtert.

Um eine Verstellung der Klemmzunge zu ermöglichen, ist ein entsprechender Freiraum in Verstellrichtung vorgesehen, in den die Klemmzunge zum Verstellen hineinverschwenkt werden kann. Dieser Freiraum ist auf der von der Gerätenasenaufnahme wegweisenden Seite der Klemmzunge vorgesehen.

Auch wenn die Klemmzunge an den übrigen Teil des Befestigungselementes mit einem Scharnier, etwa einem Filmscharnier angeschlossen sein kann und die Elastizität durch ein Zusatzelement, etwa ein Federelement sichergestellt wird, so ist bevorzugt vorgesehen, dass zur Bereitstellung der elastischen Verstellbarkeit die Materialelastizität der Klemmzunge genutzt wird. Das bedeutet, dass die Klemmzunge nach Art eines einseitig eingespannten Hebelarms ausgebildet ist, sodass sich durch die Verstellung der Klemmzunge in derselben ein Biegemoment einstellt. Die Klemmzunge ist an den übrigen Teil des Befestigungselementes angeformt. Die Einspannung der Klemmzunge ist der Wurzelbereich. Das freie Ende der Klemmzunge, welches Teil der Gerätenasenaufnahme ist, ist aufgrund der Materialelastizität dann gegenüber der Einspannung in eine Verstellrichtung verstellbar, nämlich um ihren Wurzelbereich herum verschwenkbar.

Durchaus möglich ist die Ausbildung einer gekrümmten oder gewinkelten Klemmzunge, sodass die Gerätenasenaufnahme durch die Stirnfläche des freien Endes der Klemmzunge gebildet wird. Die Klemmzunge führt mit ihrer Erstreckung dann von ihrem Wurzelbereich zu der Gerätenasenaufnahme hin in einer Bogenform. Auf diese Weise wird eine definierte Gerätenasenaufnahmefläche gebildet und trotz der Verschwenkung der Klemmzunge über den Verstellweg der Winkel, unter dem die Rückstellkraft der Klemmzunge in die Gerätenasenaufnahme eingeleitet wird, im Wesentlichen gleich gehalten. Die Krümmung bietet darüber hinaus zusätzliche Elastizität in der Klemmzunge in sich selbst, sodass die der Verstellkraft entgegenwirkende Rückstellkraft der Klemmzunge einstellbar und für bestimmte Gerätenasen anpassbar ist.

In einer Weiterbildung ist vorgesehen, dass die Klemmzunge zu ihrem freien Ende hin verjüngt ausgebildet ist, sodass sich durch die Verstellung der Klemmzunge über die Erstreckung derselben eine aus der Verstellung der Klemmzunge einheitliche resultierende Biegespannung einstellt. Für den Fachmann ist deutlich, dass "einheitlich" in diesem Kontext im Wesentlichen gleich bedeutet. Üblicherweise ist die Klemmzunge bezüglich ihrer Materialstärke verjüngt.

Die Haltearme sind im Gegensatz zu der Klemmzunge wesentlich massiver und steifer ausgebildet, sodass ein Spreizen der Gerätenasenaufnahme durch einen wesentlich geringeren Kraftaufwand erfolgen kann, als eine Spreizung der Haltearme erfordert.

Bevorzugt ist vorgesehen, dass die Klemmzunge wesentlich breiter ist als ihre Materialstärke. Auf diese Weise wird die mögliche Verstellrichtung vorgegeben und gleichzeitig der Klemmzunge zur Ausbildung der Gerätenasenaufnahme in die Richtung quer zur Materialstärke und quer zur Längserstreckung der Klemmzunge Formstabilität verliehen. Üblicherweise bewegt sich die Materialstärke im Bereich von 0,5 bis 2,5 mm, ihre Breite beträgt üblicherweise 3 bis 15 mm.

Die Haltearme stellen mit ihren zueinander weisenden Flächen ein Langgutbett für das zu haltende Langgut bereit. Das Langgutbett ist entsprechend der äußeren Kontur des Querschnittes des Langgutes geformt, beispielsweise gekrümmt für ein kreisrundes, etwa als Rohr ausgebildetes Langgut.

Es kann vorgesehen sein, dass die Klemmzunge zumindest bereichsweise Teil des Langgutbettes ist. Die Klemmzunge ist dann entsprechend der Formgebung des Langgutbettes in ihrer Erstreckungsrichtung geformt und fluchtet langgutbettseitig mit den benachbarten Bereichen der Innenseite der Haltearme.

So kann vorgesehen sein, dass der Wurzelbereich an der Innenseite eines Haltearms vorgesehen ist; von diesem erstreckt sich die Klemmzunge hin zur Gerätenasenaufnahme und folgt dabei der Krümmung des Langbettes. Um die für die elastische Verstellbarkeit erforderliche Separation von den Haltearmen zu gewährleisten, können Schlitze zwischen Haltearm und Klemmzunge vorgesehen sein. In einer anderen Ausgestaltung ist der Wurzelbereich am Rand des durch die Innenseite des Haltearms bereitgestellten Langgutbettes vorgesehen und die Klemmzunge führt das Langgutbett als laschenförmig weiter.

Zur Bereitstellung der Gerätenase ragt die Klemmzunge jedenfalls mit ihrem freien Ende von dem Haltearm ab. Dies kann etwa durch ein Weiterführen des Langgutbettes über die Innenseite der Haltearme hinaus erfolgen.

Auch kann vorgesehen sein, dass die Klemmzunge ausgehend von ihrem mit der Innenseite des Haltearms fluchtenden Wurzelbereiches mit ihrer das Langgutbett bereitstellenden Seite aus diesem herausragt, etwa um die Gerätenasenaufnahme in einem größeren axialen Abstand zu der Befestigerdurchbrechung bereitstellen zu können. Dann ist diese bevorzugt entsprechend geformt, dass sie beim Einsetzen des Langgutes in den Aufnahmeraum derart durch das Langgut verstellt wird, dass sich insgesamt ein gleichmäßiges Langgutbett ergibt.

Die Längserstreckungsrichtung des zu haltenden Langgutes ist die Querrichtung des Befestigungselementes. In Querrichtung ist die Befestigerdurchbrechung üblicherweise zentrisch in den Montagesockel eingebracht. Entsprechend ist auch die Gerätenasenaufnahme und insbesondere die Ausrichtung der Klemmzunge bezogen auf die Querrichtung des Montagesockels zentrisch vorgesehen.

Für ein optimales Halten der Gerätenase in der Gerätenasenaufnahme ist die Längserstreckung der Klemmzunge bevorzugt in Richtung des Abstandes der beiden Haltearme. So wird Raum für die Verstellung der Haltearme geschaffen.

Zum Koppeln des Befestigungselementes an dem Setzgerät ist insbesondere vorgesehen, dass das Befestigungselement auf die Gerätenase seitlich aufgeschoben wird, also: quer zur Längserstreckungsrichtung der Gerätenase. Hierdurch wird vermieden, dass die Gerätenase des Setzwerkzeuges in ihrer Längserstreckungsrichtung belastet und hierdurch ein Kraftschalter ausgelöst wird. Durch die elastische Verstellbarkeit der Klemmzunge bietet sich eine solche Montagerichtung an. Hierfür kann vorgesehen sein, dass die Klemmzunge und/oder das Widerlager in ihrem die Gerätenaseaufnahme bildenden Abschnitt in Richtung der Einsetzrichtung eine Einführschräge aufweisen.

Die Klemmzunge und das Widerlager begrenzen die Gerätenasenaufnahme. Um einen sicheren Halt der Gerätenase in der Gerätenasenaufnahme zu gewährleisten, kann vorgesehen sein, dass die Klemmzunge und/oder das Widerlager an ihrem die Gerätenasenaufnahme bildenden Teil eine die Gerätenaseaufnahme einfassende Ausklinkung aufweisen. Die Form der Ausklinkung ist üblicherweise an die Form der Gerätenase angepasst und insbesondere konkav gerundet, sodass die Gerätenase durch die Gerätenaseaufnahme entlang ihres Umfanges eingefasst ist. Es wird ein Formschluss zwischen Gerätenasenaufnahme und Gerätenase hergestellt. Hierdurch kann die Gerätenase exakt bezüglich der Befestigerdurchbrechung ausgerichtet werden, sodass ein zu setzender Befestiger positionsgenau in die Befestigerdurchbrechung eingetrieben werden kann. Darüber hinaus erfolgt beim Koppeln des Befestigungselementes an dem Setzgerät ein haptisches Feedback für den Monteur, dass die Gerätenase in der Gerätenasenaufnahme aufgenommen ist.

In einer weiteren Ausgestaltung kann vorgesehen sein, dass die Klemmzunge gespalten ist, aufweisend mehrere, etwa zwei Klemmzungenspitzen. Die Klemmzungenspitzen können an einem jeweils eigenen Wurzelbereich an dem Befestigungselement, etwa einem Haltearm, angeschlossen sein. Durch die Spaltung der Klemmzunge in zwei voneinander unabhängig verstellbare Klemmzungenspitzen wird die notwendige Verstellkraft zum Einsetzen einer Gerätenase verringert, sodass die Gefahr eines ungewollten Auslösens des Setzgerätes verhindert ist. Gleichzeitig kann durch die Spaltung der Klemmzunge mit einem Freiraum zwischen den beiden Klemmzungenspitzen eine Zentrierung der Gerätenase mit Blick auf die Befestigerdurchbrechung erfolgen.

Bevorzugt ist vorgesehen, dass das Widerlager als gegenüber der ersten Klemmzunge elastisch verstellbare zweite Klemmzunge ausgebildet ist. Die gegenseitige Abstützung bewirkt, dass sich ein Kräftegleichgewicht zwischen den beiden Klemmzungen einstellt. Die Klemmzungen sind insbesondere symmetrisch ausgebildet. Dies führt zu einer symmetrischen Haltewirkung, bei der die aufzunehmende Gerätenase bezüglich der Befestigerdurchbrechung selbstzentriert wird.

So ist insbesondere vorgesehen, dass auch die zweite Klemmzunge ein oder mehrere klemmzungenbezogene, vorstehend beschriebene Merkmale aufweist.

In einer Weiterbildung kann vorgesehen sein, dass die Befestigerdurchbrechung gestuft ausgebildet ist und bis zu einer ersten Tiefe einen Aufnahmeraum für einen Befestigerkopf aufweist. Dann kann vorgesehen sein, dass in diesem Befestigerkopfaufnahmeraum zumindest eine, üblicherweise drei oder vier konisch zulaufende Klemmwülste vorgesehen sind, sodass der Befestigerkopfaufnahmeraum als weitere Gerätenasenaufnahme dient. Die Gerätenase wird zwischen der konisch zulaufenden Klemmwulst, die sich in Tiefenrichtung der Befestigerdurchbrechung verdickt, und einem gegenüberliegenden Widerlager, etwa eine die Befestigerdurchbrechung einfassende Wand oder eine weitere, typischerweise ebenfalls konisch verdichtenden Klemmwulst, eingeklemmt. Auf diese Weise kann das Befestigungselement mit verschiedenen Gerätenasen und damit mit verschiedenen Setzgeräten an einem tragenden Untergrund montiert werden, was eine Unabhängigkeit von einem bestimmten Setzgerät bewirkt.

Um einen massiven Montagesockel bereitzustellen, damit das Befestigungselement sicher und unverformt an einem Untergrund gehalten ist, ist bevorzugt vorgesehen, nicht nur den Montagesockel selbst, sondern auch die Haltearme in ihrem sich an den Montagesockel anschließenden Bereich, etwa über zumindest ein Viertel, bevorzugt ein Drittel ihrer Erstreckung ausgehend von dem Montagesockel hin zu ihren freien Enden massiv auszugestalten. Dies kann etwa durch eine Rahmenkonstruktion erfolgen, bei der die Haltearme über miteinander verbundene Wände verfügen, die einen Hohlraum einfassen. Durch die Abstände der den Hohlraum einfassenden Wände zueinander wird im Übergangsbereich ein hohes Widerstandsmoment in die verschiedenen Richtungen, auch in Richtung einer möglichen Verstellung der Haltearme zum Einsetzen eines Langgutes in den Aufnahmeraum, bereitgestellt. Die Haltearme selbst bilden hierdurch einen Einspannabschnitt für eine mögliche elastisch verstellbare Bewegung der freien Enden der Haltearme, der sich nicht oder jedenfalls nicht Wesentlich in den Montagesockel erstreckt.

Üblicherweise verjüngen sich die Haltearme kontinuierlich, sodass die Verstellbewegung zum Spreizen der Haltearme zur Aufnahme eines Langgutes unterstützt wird.

So kann auch vorgesehen sein, dass das Befestigungselement in Hochrichtung, also in die Richtung, in die sich das Befestigungselement ausgehend vom Montagesockel hin zu den freien Enden der Haltearme erstreckt, in zwei Funktionsabschnitte unterteilt ist, die jedoch miteinander kooperieren: Einerseits ist der Montagesockel als stabil ausgestaltetes Fundament vorgesehen. Andererseits sind die Haltearme bereits für sich genommen als Clipsverbindung ausgebildet, also: sie weisen einerseits im zu dem Montagesockel weisenden Bereich einen stabilen Einspannbereich auf, in den die Haltearme bei einem Einsetzen eines Langgutes im Wesentlichen nicht verstellt werden und andererseits einen Verstellbereich, in dem die Haltearme zur Aufnahme des Langgutes verstellbar sind, üblicherweise elastisch.

Durch eine stabile Ausgestaltung des Montagesockels kann an diesem auch ein Verbindungselement zum Verbinden mit einem benachbarten Befestigungselement vorgesehen sein. Dieses kann nach einem Nut-Schienen-Prinzip aufgebaut sein, wobei auch eine hinterschnittene Ausgestaltung denkbar ist. Auch ein Stecksystem ist denkbar.

Bevorzugt ist vorgesehen, dass die Haltearme an den Montagesockel angeformt sind. So kann auch vorgesehen sein, dass das Befestigungselement einstückig gegossen ist, einschließlich der Klemmzungen. Das Befestigungselement ist dann typischerweise aus einem Kunststoff gefertigt.

In einer Ausgestaltung kann vorgesehen sein, dass das Befestigungselement als Rohrclip ausgebildet ist, bei dem die das Langgut haltenden Haltearme zum Zwecke der Montage des Langgutes reversibel spreizbar sind. Der Rohrclip fasst das Langgut entlang seines Umfangs über mehr als 180° ein und lässt einen Freiraum zum Einsetzen und Demontieren des Langgutes. Hierdurch ist eine werkzeuglose Montage des Langgutes an dem Befestigungselement möglich.

Durch die Entkopplung der Aufnahme der Kräfte beim Einsetzen des Langgutes wird einem Verformen des Montagesockels während der Montage entgegengewirkt, sodass nicht die Gefahr besteht, dass bei der Montage sich das Befestigungselement von dem Untergrund durch die Verformung lösen könnte.

In einer anderen Ausgestaltung kann vorgesehen sein, dass das Befestigungselement als Rohrschelle ausgebildet ist, welches einen die beiden Haltearme verbindenden und den Aufnahmeraum überspannenden Bügel aufweist. Die Rohrschelle fasst das Langgut vollumfänglich ein. Durch eine Rohrschelle wird ein sicherer Verschluss ermöglicht, sodass das Langgut in der Rohrschelle festgehalten ist. Der den Aufnahmeraum überspannenden Bügel kann an einen der beiden Haltearme angeformt oder als separates Bauteil ausgeführt und mit den Haltearmen mittels dem Fachmann hinlänglich bekannten Verbindungen wie Rast- oder Schraubverbindungen verbunden werden.

Zu einfachen Handhabung des Befestigungselementes während der Montage desselben an einem Montagegrund ist bevorzugt eine Anordnung eines vorstehend beschriebenen Befestigungselementes und eines eine Gerätenase aufweisenden Setzwerkzeuges vorgesehen, wobei das Befestigungselement und das Setzwerkzeug gekoppelt sind, indem die Gerätenase des Setzwerkzeuges in die die Klemmzunge aufweisende Gerätenasenaufnahm eingesetzt ist.

Die Erfindung wird anhand der beiliegenden Figuren näher erläutert. Es zeigen:
- **Fig.** 1:: Eine dreidimensionale Ansicht einer ersten Ausgestaltung eines Befestigungselementes,
- **Fig. 2:**: eine Seitenansicht des in Figur 1 dargestellten Befestigungselementes,
- **Fig. 3:**: eine Draufsicht auf das in Figur 1 dargestellte Befestigungselement,
- **Fig. 4:**: eine Schnittansicht A-A durch das in Figur 3 dargestellte Befestigungselement,
- **Fig. 5a bis 7b:**: Draufsichten sowie Schnittansichten durch das Befestigungselement während eines Einsetzvorganges einer Gerätenase eines Setzwerkzeuges in die Gerätenaseaufnahme des Befestigungselementes,
- **Fig. 8:**: eine dreidimensionale Ansicht einer zweiten Ausgestaltung eines Befestigungselementes,
- **Fig. 9:**: eine Draufsicht auf das in Figur 8 dargestellte Befestigungselement,
- **Fig. 10:**: eine Schnittansicht A-A durch das in Figur 9 dargestellte Befestigungselement und
- **Fig. 11:**: eine dreidimensionale Ansicht einer dritten Ausgestaltung eines Befestigungselementes,
- **Fig. 12:**: eine Draufsicht auf das in Figur 11 dargestellte Befestigungselement,
- **Fig. 13:**: eine Seitenansicht des in Figur 11 dargestellten Befestigungselementes.

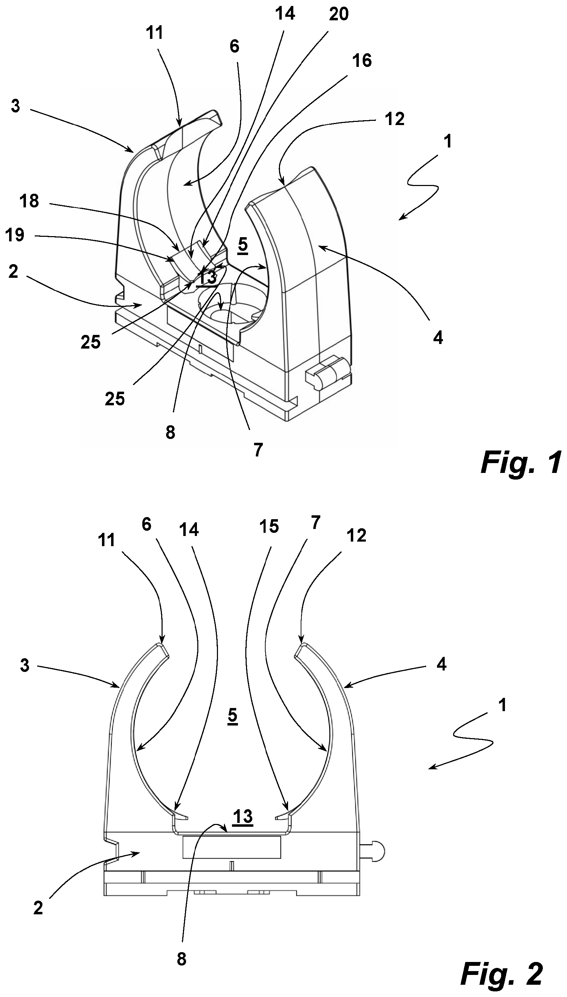

Die Figuren 1 bis 4 zeigen in verschiedenen Ansichten ein Befestigungselement 1 in einer beispielhaften Ausgestaltung. Das Befestigungselement 1 ist aus einem Kunststoff im Rahmen eines Spritzgussverfahrens einstückig hergestellt. Es dient der Befestigung eines in den Figuren nicht dargestellten Langgutes, nämlich eines Leerrohres für eine elektrische Installation.

Das Befestigungselement 1 umfasst einen Montagesockel 2 sowie zwei Haltearme 3, 4, wobei die Haltearme 3, 4 einen Aufnahmeraum 5 einfassen, in dem das nicht dargestellte Langgut gehalten ist. Die Haltearme 3, 4 sind einander gegenüberliegend an dem Montagesockel 2 angeformt, sodass das Langgut, wenn in dem Aufnahmeraum 5 gehalten, über mehr als 180° entlang seines Umfanges eingefasst ist. Die Innenseiten 6, 7 der Haltearme 3, 4 bilden ein Langgutbett: sie entsprechen der Kontur, die das aufzunehmende Langgut an seinem äußeren Umfang aufweist.

An dem montagesockelseitigen Grund des Aufnahmeraums ist eine Befestigerdurchbrechung 8 in den Montagesockel 2 eingebracht. Die Befestigerdurchbrechung 8 ist dazu angelegt, dass ein in den Figuren nicht dargestellter Befestiger die Befestigerdurchbrechung 8 durchgreift und das Befestigungselement 1 an einem, in den Figuren nicht dargestellten, in Figur 1 unterhalb des Befestigungselementes 1 vorgesehenen, tragenden Untergrund befestigt.

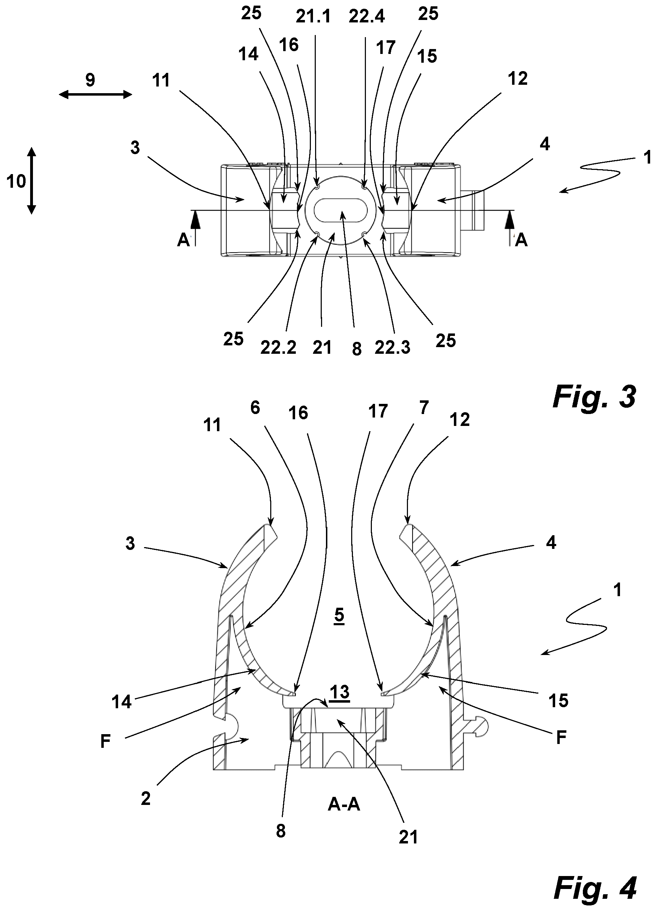

Wie insbesondere in Figur 3 zu erkennen, ist die Befestigerdurchbrechung 8 als Langloch ausgebildet und zwar mit seiner Langerstreckung in Abstandsrichtung zwischen den beiden Haltearmen 3, 4. Diese Richtung wird nachstehend auch als Längsrichtung 9 des Befestigungselementes 1 angesprochen. Die Befestigerdurchbrechung 8 ist in Querrichtung 10 des Befestigungselementes 1, also derjenigen Richtung, die der Längserstreckungsrichtung eines einzusetzenden Langgutes entspricht, zentrisch in den Montagesockel 2 eingebracht.

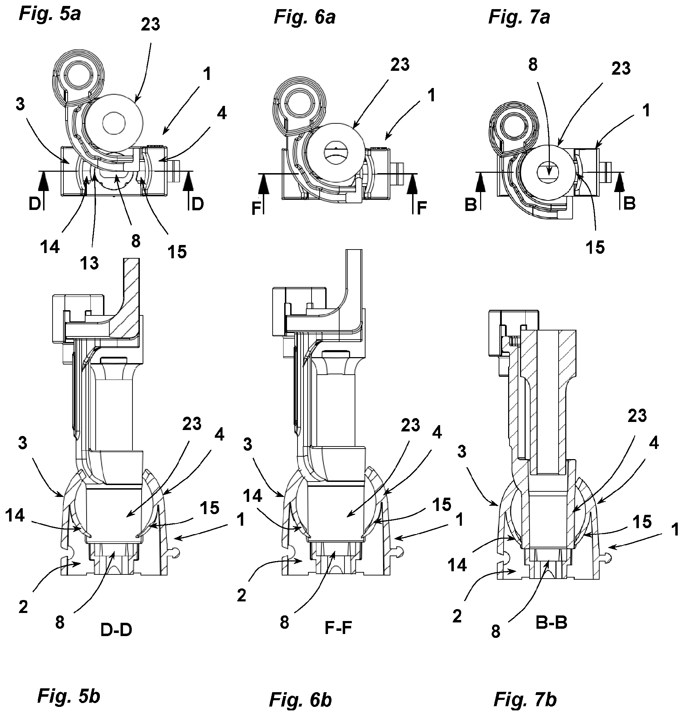

Die Montage des Befestigungselementes 1 auf einen tragenden Untergrund kann mit Hilfe eines Setzgerätes erfolgen. Ein Setzgerät weist eine Gerätenase auf, die mit dem Befestigungselement 1 gekoppelt wird, sodass das Befestigungselement 1 mit dem Setzgerät gehandhabt werden kann. Durch die Gerätenase hindurch wird auf Auslösung eines Monteurs hin ein Befestiger, üblicherweise ein Setznagel, durch die Befestigerdurchbrechung 8 des Befestigungselementes 1 in den tragenden Untergrund hineingetrieben. Eine solche Gerätenase ist in den Figuren 5 bis 7 dargestellt, welche weiter unten näher erläutert wird.

Das Befestigungselement 1 ist dazu ausgelegt, dass die Befestigerdurchbrechung 8 mit einer Gerätenase eines Setzgerätes durch den durch die Haltearme 3, 4 eingefassten Aufnahmeraum 5 hindurch erreichbar ist; die Haltearme 3, 4 weisen, insbesondere bezüglich ihrer freien Enden 11, 12 einen entsprechenden Abstand auf; hier, wie etwa in Figur 2 zu erkennen, eine entsprechende Ausformung.

Zum Koppeln der Gerätenase eines Setzwerkzeuges mit dem Befestigungselementes 1 weist letzteres eine Gerätenasenaufnahme 13 auf. Gebildet wird die Gerätenasenaufnahme 13 durch eine Klemmzunge 14 und einem Widerlager 15, welches in der Ausgestaltung des Befestigungselementes 1 ebenfalls als Klemmzunge ausgebildet ist.

Die Klemmzunge 14 ist in Bezug auf das als zweite Klemmzunge ausgeführte Widerlager 15 elastisch verstellbar und zwar im Wesentlichen in Längsrichtung 9 des Befestigungselementes 1. Durch die elastische Verstellbarkeit der Klemmzunge 14 gegenüber dem Widerlager 15 ist die Weite der Gerätenasenaufnahme 13 veränderlich, also: der Abstand zwischen freiem Ende 16 der Klemmzunge 14 sowie die die Gerätenaseaufnahme 13 bildende Kontur des Widerlagers 15, hier das freie Ende 17 der zweiten Klemmzunge. Durch die Verstellbarkeit der Klemmzunge 14 kann eine Gerätenase in der Gerätenasenaufnahme 13 eingeklemmt werden: Die Gerätenase spreizt die Gerätenasenaufnahme 13 während des Einsetzvorgangs, indem die erste Klemmzunge 14 und die zweite Klemmzunge, die das Widerlager 15 bildet, elastisch verstellt werden. Durch die Klemmwirkung zwischen Klemmzunge 14 und Widerlager 15 ist die Gerätenase in der Gerätenasenaufnahme 13 gehalten, sodass das Befestigungselement 1 an das Setzgerät gekoppelt ist.

Die Klemmzunge 14 ragt in den Aufnahmeraum 5 mit ihrem freien Ende 16 hinein, sodass die Gerätenasenaufnahme 13 mit der Befestigerdurchbrechung 8 fluchtet.

Die Klemmzunge 14 ist befestigungselementseitig an dem Haltearm 3 angeformt und in den durch die Innenseite 6 des Haltearmes 3 bereitgestellten Teil des Langgutbettes integriert. Die Länge der Klemmzunge 14 wird in diesem Ausführungsbeispiel durch zwei beidseitig der Klemmzunge 14 angeordnete Schlitze 19, 20, die die Klemmzunge 14 von der übrigen Innenseite 6 des Haltearmes 3 trennen, bestimmt. Durch die Trennung von den Innenseiten 6 des Haltearms 3 ist die Klemmzunge 14 ausgehend von ihrem Wurzelbereich 18 insbesondere hin zu ihrem freien Ende 16 von demselben unabhängig.

Die Klemmzunge 14 und das als zweite Klemmzunge ausgebildete Widerlager 15 sind jeweils als einseitig abgestützter Hebelarm ausgebildet. Die elastische Verstellbarkeit derselben resultiert aus der Materialelastizität: Wirkt eine Verstellkraft, üblicherweise in Längsrichtung 9 des Befestigungselementes 1, auf das freie Ende 16 der Klemmzunge 14, stellt sich ein Biegemoment in der Klemmzunge 14 ein.

Die Klemmzunge 14 ist gekrümmt ausgestaltet, sodass sie sich in das Langgutbett, welches ebenfalls gekrümmt ausgebildet ist, fluchtend eingefügt.

Wie in der Schnittdarstellung in Figur 4 erkennbar, ist die Klemmzunge 14 zu ihrem Wurzelbereich 18 hin zu ihrem freien Ende 16 verjüngt ausgebildet. Ferner ist die Klemmzunge 14 wesentlich breiter als ihre Materialstärke; das bedeutet, in Querrichtung 10 des Befestigungselementes 1 weist die Klemmzunge 14 ihr eine Formstabilität verleihende Erstreckung auf, während die Richtung, in der die Klemmzunge 14 elastisch verstellbar ist, dünn ausgebildet ist. So ist die Verstellbarkeit der Klemmzunge 14 in Richtung der Materialstärke eingeschränkt ist.

Damit die Klemmzunge 14 und das als Klemmzunge ausgebildete Widerlager 15 verstellbar ist, ist in Verstellrichtung ein Freiraum F gegeben, in den die Klemmzunge 14, und das als Klemmzunge ausgebildete Widerlager 15 hineinverstellt werden können.

Der Freiraum F ist ein von den die Haltearme 3, 4 bildenden Wänden eingefasster Hohlraum. Die Haltearme 3, 4 sind in diesem Bereich als Rahmenkonstruktion ausgelegt, also: sie weisen mehrere miteinander verbundene Wände auf, sodass in diesem Bereich ein großes Widerstandsmoment bereitgestellt wird. Dadurch wird ein Gegenlager seitens der Haltearme 3, 4 selbst mit Blick auf die freien Enden 11, 12 der Haltearme 3, 4 bereitgestellt, sodass die freien Enden 11, 12 beim Einsetzen eines Langgutes in Längsrichtung 9 des Befestigungselementes verstellbar sind. Die dadurch sich ergebende elastische Verformung der Haltearme 3, 4 wird jedoch im Wesentlichen nicht bis zum Montagesockel 2 weitergeleitet, sondern in dem als Rahmenkonstruktion ausgebildeten Teil der Haltearme aufgefangen, sodass beim Einsetzvorgang der Montagesockel im Wesentlichen nicht verformt wird und er stabil am Befstigungsgrund befestigt verbleibt.

Um die Gerätenase in der Gerätenaseaufnahme 13 bezüglich der Befestigerdurchbrechung 8 zu zentrieren ist nicht nur vorgesehen, dass das Widerlager 15 genau gegenüberliegend ebenfalls als Klemmzunge ausgebildet ist, damit die auf die Gerätenase wirkenden Kräfte der Klemmzungen 14, 15 sich ausgleichen, sondern beide Klemmzungen 14, 15 verfügen an ihrem jeweiligen freien Ende 16, 17 über eine gerundete Ausklinkung. Die Ausklinkung ist Teil der Gerätenasenaufnahme 13 und wird dem Umstand gerecht, dass Gerätenasen üblicherweise in ihrer äußeren Kontur ebenfalls rund sind. Hierdurch wird eine Zentrierung gegenüber der Befestigerdurchbrechung 8 in Querrichtung 10 des Befestigungselementes 1 erzielt.

Die Klemmzunge 14 und auch das als Klemmzunge ausgebildete Widerlager 15 sind gegeneinander derart weit elastisch verstellbar, dass in die Gerätenasenaufnahme 13 zumindest zwei sich bezüglich ihres Durchmessers unterscheidende Gerätenasen einsetzbar sind.

Der Kopplungsvorgang des Befestigungselementes 1 an eine Gerätenase 23 ist in den Figuren 5a bis 7b in Standbildern des Einsetzvorgangs gezeigt. Die Figuren 5a, 6a und 7a sind jeweils Draufsichten auf die Gerätenase 23 (das übrige Setzgerät ist der Übersicht halber ausgeblendet), während die Figuren 5b, 6b und 7b jeweils Schnittdarstellungen zu den Figuren 5a, 6a und 7a sind.

Die Kopplungsbewegung zum Aufsetzen des Befestigungselementes 1 auf die Gerätenase 23 erfolgt bezogen auf die Längserstreckungsrichtung 24 der Gerätenase 23 von der Seite. Dies dient dem Zweck, dass das Setzgerät durch eine in Längserstreckungsrichtung 24 der Gerätenase 23 wirkende Kraft während des Einsetzvorgangs nicht ungewollt ausgelöst wird.

In den Figuren 5a, 5b ist die Gerätenase 23 noch außerhalb der Gerätenasenaufnahme 13 angeordnet, jedoch bereits auf der entsprechend vorgesehenen Höhe.

In den Figuren 6a und 6b ist die Gerätenase 23 bereits abschnittsweise in die Gerätenaseaufnahme 13 des Befestigungselementes 1 eingeschoben. Die Haltearme 3, 4 weisen einen Abstand auf, sodass die Gerätenase 23 in den Aufnahmeraum 5 zu der Befestigerdurchbrechung 8 geschoben werden kann. Die Figuren 6a und 6b zeigen den Zeitpunkt, bei dem die Gerätenase 23 die Klemmzunge 14 und das als Klemmzunge ausgebildete Widerlager 15 an ihren Einführschrägen 25 berührt; die Klemmzunge 14 und das als Klemmzunge ausgebildete Widerlager 15 sind bereits gegenüber der Darstellung in Figur 5b durch den Einführvorgang etwas gespreizt.

Die Figuren 7a und 7b zeigen den Zustand, bei dem die Gerätenase 23 vollständig in die Gerätenasenaufnahme 13 eingesetzt ist. Die Klemmzunge 14 sowie das als Klemmzunge ausgebildete Widerlager 15 liegen außenseitig mit ihren jeweiligen freien Enden 16, 17 an der Außenkontur der Gerätenase 23 an und klemmen diese ein. Wie in Figur 7a zu erkennen, ist die Gerätenase 23 exakt zentrisch, in Querrichtung 10 des Befestigungselementes 1 oberhalb der Befestigerdurchbrechung 8 ausgerichtet und erreicht diese durch den Aufnahmeraum 5, der durch die beiden Haltearme 3, 4 eingefasst wird, hindurch.

In dieser Stellung ist das Befestigungselement 1 an die Gerätenase 23, respektive das hier nicht näher dargestellte Setzgerät gekoppelt, sodass das Befestigungselement 1 mit dem Setzgerät gemeinsam gehandhabt werden kann.

Um eine weitere Gerätenasenaufnahme zu schaffen, ist die Befestigerdurchbrechung 8 gestuft ausgebildet und weist in einer ersten Tiefe einen größeren Durchmesser als in einer zweiten Tiefe auf. Bis zu der ersten Tiefe wird so ein Befestigerkopfaufnahmeraum 21 für einen Kopf eines Befestigers geschaffen. In dem Befestigerkopfaufnahmeraum 21 sind in diesem Ausführungsbeispiel vier Klemmwülste 22.1, 22.2, 22.3, 22.4 vorgesehen, die, wie in Figur 4 zu erkennen, in Tiefenrichtung der Befestigerdurchbrechung 8 konisch verdicken. Auf diese Weise wird der Befestigerkopfaufnahmeraum 21 zu einer weiteren Gerätenasenaufnahme ausgebildet; eine Gerätenase mit einem entsprechenden Durchmesser kann zwischen den Klemmwülsten 22.1 bis 22.4 in dem Befestigerkopfaufnahmeraum 21 eingeklemmt werden, sodass das Befestigungselement 1 an das Setzgerät gekoppelt ist.

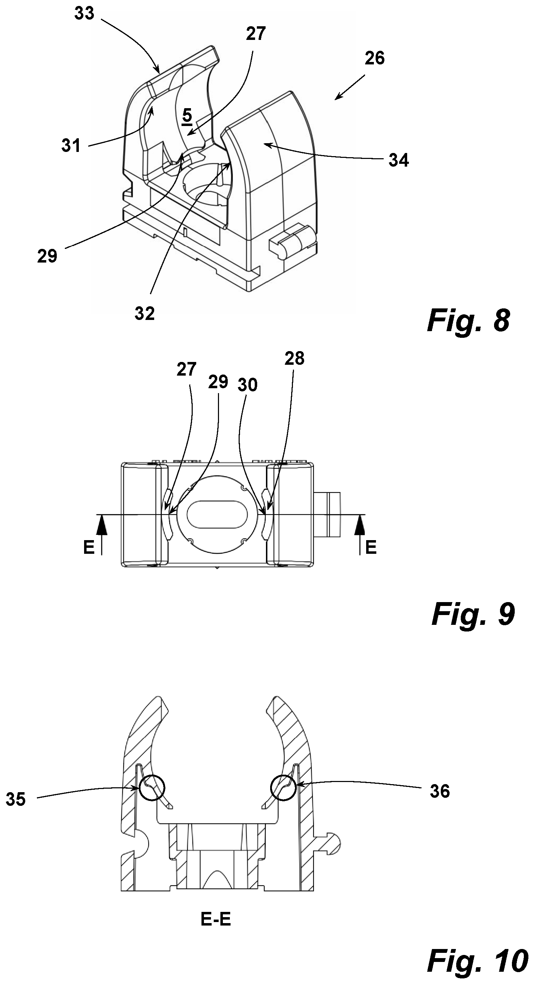

Die Figuren 8 bis 10 zeigen ein weiteres Befestigungselement 26. Dieses ist dem Grunde nach gleich aufgebaut wie das oben beschriebene Befestigungselement 1. Es unterscheidet sich von diesem lediglich durch einen kleineren Nenndurchmesser, das bedeutet: der Aufnahmeraum 5 ist für einen kleineren Langgutdurchmesser ausgelegt. Damit sind sämtliche Proportionen entsprechend angepasst.

Zudem ist die Klemmzunge 27 sowie das entsprechende Widerlager 28, welches hier ebenfalls als Klemmzunge ausgeführt ist, leicht verschieden ausgebildet: Die Klemmzunge 27 und das ebenfalls als Klemmzunge ausgebildete Widerlager 28 ragt mit ihrem jeweiligen freien Ende 29, 30 in den Aufnahmeraum 5 hinein. Insgesamt ist die Klemmzunge 27 - gleiches gilt auch für das Widerlager 28 - eine Verlängerung des durch die Innenseiten 31, 32 der Haltearme 33, 34 gebildete Langgutbett. Im Wurzelbereich 35, 36 der Klemmzunge 27 bzw. des Widerlagers 28 ist das Material stufenartig ausgedünnt, um die erforderliche Verstellbarkeit der Klemmzunge 27 zu erzielen.

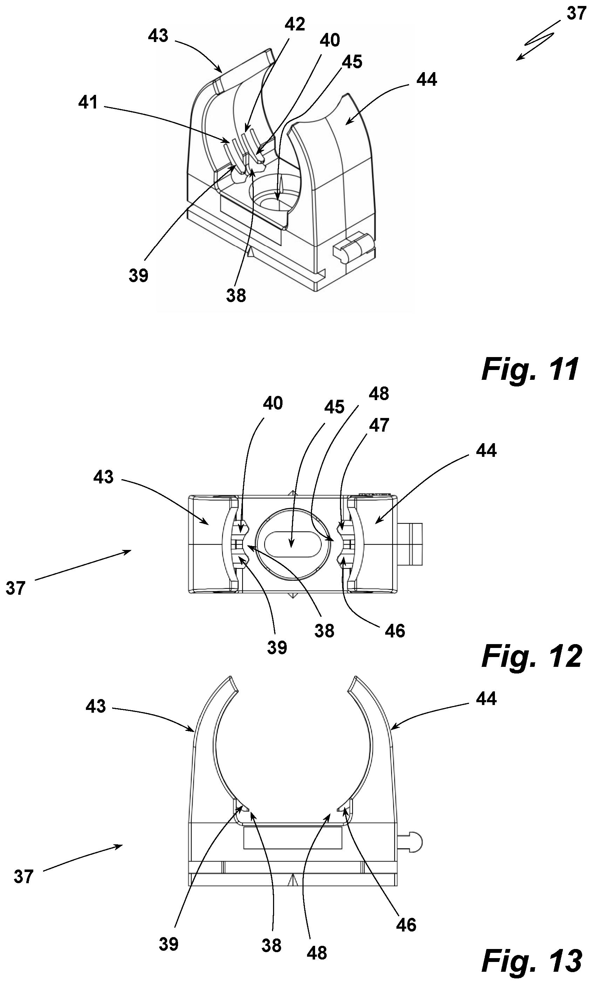

Figuren 11 bis 13 zeigen ein weiteres Befestigungselement 37. Bei diesem Befestigungselement 37 ist die Klemmzunge 38 gespalten ausgebildet. Sie umfasst zwei Zungenspitzen 39, 40. Die Zungenspitzen 39, 40 sind beide in einem jeweiligen Wurzelbereich 41, 42 an den jeweiligen Haltearmen 43, 44 angeschlossen und gegenüber den Haltearmen 43, 44 elastisch verstellbar.

Durch die Spaltung der Klemmzunge 38 wird der Einsetzvorgang der Gerätenase vereinfacht und gleichzeitig eine Zentrierung der Gerätenase gegenüber der Befestigerdurchbrechung 45 erzielt. Obwohl durch die Spaltung der Klemmzunge 38 in zwei Zungenspitzen 39, 40 die Einsetzkraft geringer ist, so ist durch die Anordnung des Wurzelbereiches 41, 42 oberhalb von der Ebene, in der die Gerätenase an den Klemmzungen 38 eingefasst ist, ein Widerhakensystem bereitgestellt, sodass das Befestigungselement 37 durch das Zusammenwirken von Klemmzungen spitzen 39, 40 und ebenfalls mit Klemmzungenspizen 46, 47 ausgebildetes Widerlager 48 fest an einer Gerätenase gehalten ist.

Im Übrigen ergeben sich die gleichen Aspekte wie zu den anderen, vorstehend beschriebenen Ausführungsbeispielen gemacht.

Die Erfindung ist anhand von drei Ausführungsbeispielen beschrieben worden. Ohne den Schutzbereich, beschrieben durch die geltenden Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1, 26, 37: Befestigungselement
- 2: Montagesockel
- 3, 4, 33, 34, 43, 44: Haltearm
- 5: Aufnahmeraum
- 6, 7, 31, 32: Innenseite der Haltearme
- 8, 45: Befestigerdurchbrechung
- 9: Längsrichtung des Befestigungselementes
- 10: Querrichtung des Befestigungselementes
- 11, 12: Freie Enden der Haltearme
- 13: Gerätenasenaufnahme
- 14, 27, 38: Klemmzunge
- 15, 28, 48: Widerlager
- 16, 17, 29, 30: Freies Ende der Klemmzunge/Widerlager
- 18, 35, 36: Wurzelbereich der Klemmzunge/des Widerlagers
- 19, 20: Schlitz
- 21: Befestigerkopfaufnahmeraum
- 22.1, 22.2, 22.3, 22.4: Klemmwulst
- 23: Gerätenase
- 24: Längserstreckungsrichtung der Gerätenase
- 25: Einführschräge der Klemmzunge
- 39, 40, 46, 47: Klemmzungenspitze
- F: Freiraum

## Patentansprüche

1. Befestigungselement (1, 26, 37) zur Befestigung eines Langgutes, etwa eines Rohres zum Führen von elektrischen Leitungen auf einem Untergrund, das Befestigungselement (1, 26, 37) aufweisend einen Montagesockel (2) und zwei einen Aufnahmeraum (5) einfassende Haltearme (3, 4, 33, 34, 43, 44) zum Halten eines Langgutes, die zur Einfassung des Aufnahmeraumes (5) an den Montagesockel (2) einander gegenüberliegend angeschlossen sind, wobei an dem montagesockelseitigen Grund des Aufnahmeraums (5) eine Befestigerdurchbrechung (8) in dem Montagesockel (2) angeordnet ist, die dazu ausgelegt ist, das Befestigungselement (1, 26, 37) mit einem die Befestigerdurchbrechung (8) durchgreifenden Befestiger an einem tragenden Untergrund zu befestigen, und wobei die Befestigerdurchbrechung (8) mit einem Setzwerkzeug durch den Aufnahmeraum (5) hindurch erreichbar ist, wobei hierfür die Haltearme (3, 4, 33, 34) einen ausreichenden Abstand aufweisen, **dadurch gekennzeichnet, dass** das Befestigungselement (1, 26, 37) ferner eine Klemmzunge (14, 27, 38) und ein Widerlager (15, 28, 48) aufweist, wobei die Klemmzunge (14, 27, 38) und das Widerlager (15, 28, 48) gemeinsam eine zum Halten einer Gerätenase (23) eines Setzwerkzeuges ausgebildete Gerätenasenaufnahme (13) bilden, wobei die Gerätenasenaufnahme (13) innerhalb des Aufnahmeraums (5) angeordnet ist, wobei die Klemmzunge (14, 27, 38) in Bezug auf das Widerlager (15, 28, 48) elastisch verstellbar ist, sodass die Gerätenasenaufnahme (13) zum Einsetzen einer Gerätenase (23) in ihrer Weite veränderlich ist.

2. Befestigungselement nach Anspruch 1, **dadurch gekennzeichnet, dass** der Wurzelbereich (18, 35, 36), an dem die Klemmzunge (14, 27, 38) an das Befestigungselement (1, 26, 37) angeschlossen ist, radial außerhalb der Gerätenasenaufnahme (13) angeordnet ist.

3. Befestigungselement nach Anspruch 1 oder 2, **dadurch gekennzeichnet, dass** der Wurzelbereich (18, 35, 36), an dem die Klemmzunge (14, 27, 38) an das Befestigungselement (1, 26, 37) angeschlossen ist, gegenüber der Ebene, in der die Gerätenasenaufnahme (13) vorgesehen ist, in Richtung der Achse der Befestigerdurchbrechung versetzt angeordnet ist.

4. Befestigungselement nach einem der Ansprüche 1 bis 3, **dadurch gekennzeichnet, dass** die Klemmzunge (14, 27, 38) als einseitig abgestützter Hebelarm ausgebildet ist, sodass sich durch die Verstellung der Klemmzunge (14, 27, 38) in der Klemmzunge (14, 27, 38) ein Biegemoment einstellt.

5. Befestigungselement nach Anspruch 4, **dadurch gekennzeichnet, dass** die Klemmzunge (14, 27) zu ihrem freien Ende hin verjüngt ausgebildet, sodass sich durch die Verstellung der Klemmzunge (14, 27) über die Erstreckung der Klemmzunge (14, 27) eine einheitliche aus der Verstellung resultierende Biegespannung einstellt.

6. Befestigungselement nach einem der Ansprüche 1 bis 5, **dadurch gekennzeichnet, dass** die Klemmzunge (14, 27) wesentlich breiter ist als ihre Materialstärke.

7. Befestigungselement nach einem der Ansprüche 1 bis 6, **dadurch gekennzeichnet, dass** die Klemmzunge (14, 27, 38) befestigungselementseitig an einem Haltearm (3, 4, 33, 34, 43, 44) angeschlossen, insbesondere angeformt ist.

8. Befestigungselement nach einem der Ansprüche 1 bis 7, **dadurch gekennzeichnet, dass** die Klemmzunge (14, 27, 38) gegenüber dem Widerlager (15, 28, 48) derart weit elastisch verstellbar ist, dass in die Gerätenasenaufnahme (13) zumindest zwei sich bezüglich ihres Durchmessers unterscheidende Gerätenasen (23) einsetzbar sind.

9. Befestigungselement nach einem der Ansprüche 1 bis 8, **dadurch gekennzeichnet, dass** die Klemmzunge (14, 27) und/oder das Widerlager (15, 28) an ihrem die Gerätenasenaufnahme (13) bildenden Teil eine die Gerätenaseaufnahme (13) einfassende Ausklinkung aufweisen.

10. Befestigungselement nach einem der Ansprüche 1 bis 9, **dadurch gekennzeichnet, dass** das Widerlager (15, 28, 48) als zweite, gegenüber der ersten Klemmzunge (14, 27, 38) elastisch verstellbare Klemmzunge (14, 27, 38) ausgebildet ist.

11. Befestigungselement nach Anspruch 10, **dadurch gekennzeichnet, dass** die zweite Klemmzunge die klemmzungenbezogenen Merkmale der Ansprüche 1 bis 9 aufweist.

12. Befestigungselement nach einem der Ansprüche 1 bis 11, **dadurch gekennzeichnet, dass** die Befestigerdurchbrechung (8) gestuft ausgebildet ist und bis zu einer ersten Tiefe einen Aufnahmeraum (5) für einen Befestigerkopf aufweist und wobei in diesem Befestigerkopfaufnahmeraum (21) zumindest eine konisch zulaufende Klemmwulst (22.1, 22.2, 22.3, 22.4) vorgesehen ist, sodass der Befestigerkopfaufnahmeraum (21) als weitere Gerätenasenaufnahme dient.

13. Befestigungselement nach einem der Ansprüche 1 bis 12, **dadurch gekennzeichnet, dass** das Befestigungselement (1, 26) als Rohrclip ausgebildet ist, bei dem die das Langgut haltenden Haltearme (3, 4, 33, 34) zum Zwecke der Montage des Langgutes reversibel spreizbar sind.

14. Befestigungselement nach einem der Ansprüche 1 bis 12, **dadurch gekennzeichnet, dass** das Befestigungselement (1, 26) als Rohrschelle ausgebildet ist, welches einen die beiden Haltearme (3, 4, 33, 34) verbindenden und den Aufnahmeraum (5) überspannenden Bügel aufweist.

15. Anordnung eines Befestigungselementes (1, 26) mit den Merkmalen eines der Ansprüche 1 bis 14 und eines eine Gerätenase (23) aufweisendes Setzwerkzeuges, wobei das Befestigungselement (1, 26) und das Setzwerkzeug gekoppelt sind, indem die Gerätenase (23) des Setzwerkzeugs in die die Klemmzunge (14, 27) aufweisende Gerätenasenaufnahme (13) eingesetzt ist.
